# EUROPEAN PATENT APPLICATION

(11) **EP 3 560 601 A1**
(43) Date of publication of application: **30.10.2019**
(21) Application number: 16924783.0
(22) Date of filing: 22.12.2016
(51) Int. Cl.: B03B 5/28, B04B 1/02, B04B 13/00, B04B 15/00

(54) **CENTRIFUGAL FIELD-FLOW FRACTIONATION DEVICE**

(71) Applicant: Shimadzu Corporation, Kyoto-shi, Kyoto 604-8511 (JP)
(72) Inventor: AOKI, Kengo, Kyoto-shi Kyoto 604-8511 (JP)
(74) Representative: Mewburn Ellis LLP
(86) International application number: PCT/JP2016/088335
(87) International publication number: WO 2018/116440

(57) **Abstract**

Provided is a centrifugal field-flow fractionation device capable of suppressing deformation of a channel member. Pressure in a channel formed inside the channel member in a centrifugal field-flow fractionation device 1 is increased by a pressure increasing mechanism 8 provided downstream of the centrifugal field-flow fractionation device 1. In this manner, an inner surface of the channel is pressed outward by a liquid sample in the channel, and an outer peripheral surface and an inner peripheral surface of the channel member can be suppressed from being recessed toward the channel side.

## Description

### TECHNICAL FIELD

The present invention relates to a centrifugal field-flow fractionation device that allows a liquid sample to flow into a channel provided along an inner peripheral surface of an annular rotor and rotates the rotor to classify particles in the liquid sample in the channel by a centrifugal force.

### BACKGROUND ART

Field-flow fractionation is known as a method of classifying particles contained in a liquid sample according to specific gravity. For example, Patent Document 1 below discloses an example of a centrifugal field-flow fractionation device that allows a liquid sample to flow into a channel and rotates the channel to classify particles in the liquid sample by a centrifugal force.

The centrifugal field-flow fractionation device includes, for example, a rotor, a channel member, a fixing member, and the like. The rotor is formed in an annular shape, and is rotatably held about a rotation axis. The channel member has, for example, a three-layer structure, and layers are sequentially stacked in a state where each layer is curved in an arc shape along an inner peripheral surface of the rotor. The fixing member is a C-shaped member extending in an arc shape along an inner peripheral surface (a layer closest to the rotation axis) of the channel member.

Each of the layers constituting the channel member has an elongated shape, and includes an intermediate layer (see FIG. 5 of Patent Document 1) on which an opening extending in a longitudinal direction is formed, and outer surface layer and an inner surface layer (see FIGS. 4(a) and 4(b) of Patent Document 1) sandwiching the intermediate layer to form a channel between an outer side and an inner side of the opening by closing the outer and inner sides. On the inner surface layer, an inlet and an outlet respectively including a through-hole communicating with the channel are formed. A liquid sample is allowed to flow into the channel through the inlet, and to flow out of the channel through the outlet.

The layers of the channel member as described above are stacked in a state curved along an outer peripheral surface of the fixing member, and attached to the fixing member using a bolt or a pin. The fixing member to which the channel member is attached is inserted into space inside the rotor, and is fixed along an inner peripheral surface of the rotor so as to sandwich the channel member with the rotor. At this time, with a wedge-shaped member attached between both ends of the C-shaped fixing member, a force is applied in a direction in which the both ends are expanded (see FIG. 6 of Patent Document 1). In this manner, the C-shaped fixing member is strongly pressed against the inner peripheral surface side of the rotor so as to be fixed, and the channel member is sandwiched between the fixing member and the rotor.

In the centrifugal field-flow fractionation device assembled as described above, the rotor is rotated so that the channel member attached to the rotor is rotated, and a centrifugal force can be applied to a liquid sample in the channel. As a result, particles contained in the liquid sample flowing into the channel from the inlet flow out from the outlet at different timings according to the specific gravity. In this manner, the particles in the liquid sample are classified according to the specific gravity.

The rotor is rotatably held by, for example, a hollow rotational shaft, and the inlet and the outlet communicate with the rotational shaft via pipes. A liquid sample is, for example, supplied into the rotational shaft from one end of the rotational shaft, and classified by being introduced into the channel of the channel member from the inlet through a pipe, and then into the rotational shaft from the outlet through a pipe.

### PRIOR ART DOCUMENTS

### PATENT DOCUMENTS

Patent Document 1: JP-T-2014-518761

### SUMMARY OF THE INVENTION

### PROBLEMS TO BE SOLVED BY THE INVENTION

As a first problem, in the conventional configuration as described above, the channel member may be deformed to affect the classification performance. In particular, an outer surface layer and an inner surface layer of the channel member are easily deformed because they are made from thin sheet-like members, and constitute a large portion of an inner surface of the channel. Accordingly, there is a problem that flow of a liquid sample in the channel is easily influenced in accordance with the deformation, and the classification performance is apt to be lowered.

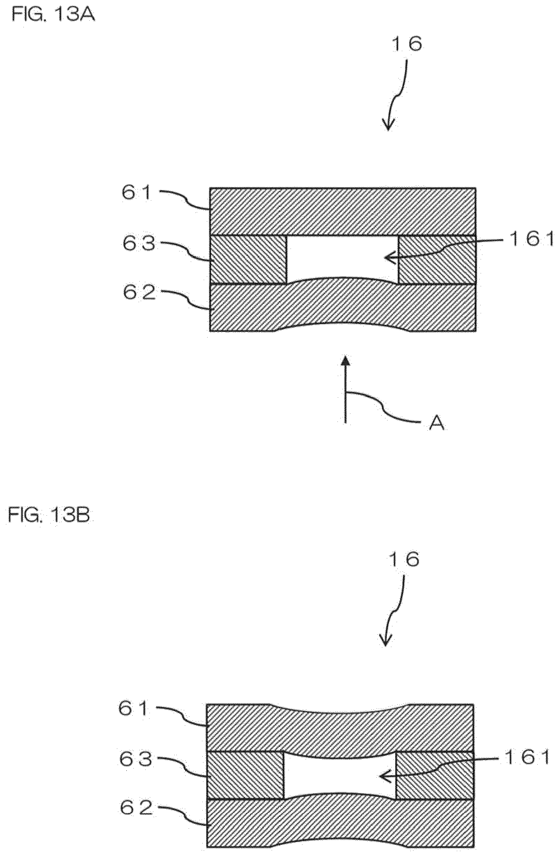

FIG. 13A is a schematic cross-sectional view showing an example of a mode in which a channel member 16 is deformed. This example shows a mode in a case where the channel member 16 is deformed by a centrifugal force when the rotor rotates. Specifically, a centrifugal force acting in a direction of an arrow A causes an inner surface layer 62 among an outer surface layer 61, the inner surface layer 62, and an intermediate layer 63 forming the channel 161 to have a shape recessed toward a channel 161 side. Although the centrifugal force also acts on the outer surface layer 61, the outer surface layer 61 is hardly deformed since the rotor is in contact with an outer side (an opposite side to the intermediate layer 63 side) of the outer surface layer 61 either directly, or indirectly with a spacer and the like interposed between outer side and the rotor.

FIG. 13B is a schematic cross-sectional view showing another example of a mode in which the channel member 16 is deformed. The inventor of the present invention has arrived at constituting the channel member 16 as one hollow member in which the channel 161 is formed by joining the outer surface layer 61 and the inner surface layer 62 to the intermediate layer 63 from the viewpoint of making it difficult for the liquid sample to leak out from the inside of the channel 161 and facilitating mounting and demounting operation of the channel member 16. In this case, if an attempt is made to join the layers 61, 62, and 63 after deforming them in an arc shape, shapes of the layers 61, 62, and 63 vary, and it is difficult to join the layers in an excellent manner. Accordingly, the layers 61, 62, and 63 are preferably deformed in an arc shape after being joined in a straight state. However, if the layers 61, 62, and 63 are deformed after joined, as shown in FIG. 13B, there is a problem that the outer surface layer 61 and the inner surface layer 62 are recessed toward the channel 161 side.

As a second problem, in the conventional configuration, air bubbles are likely to be mixed in a process of a liquid sample passing through the centrifugal field-flow fractionation device, and the air bubbles may adversely affect analysis. First, as also illustrated in FIGS. 13A and 13B, the channel 161 formed in the channel member 16 has a flat shape and a sealing structure having a long shape along a circumferential direction. Accordingly, once air bubbles are mixed into the channel 161, there is a problem that the air bubbles are difficult to remove from the channel 161.

Further, there is a problem that air bubbles are likely to be generated, for example, also in the rotational shaft or in the pipe while the liquid sample is supplied into the channel 161 of the channel member 16. Specifically, due to the presence of a dead volume in the rotational shaft or in the pipe, air bubbles are easily introduced into the liquid sample. Further, in a case where the inside of the rotational shaft is held in a liquid-tight manner by a pair of sliding rings that rotate relative to one another while in contact with each other, the sample fluid may be agitated in this contact portion to generate air bubbles. Furthermore, the contact portion of the pair of sliding rings is generally cooled using cold water or the like. However, in a case where the cooling is insufficient, the friction of the contact portion causes the temperature to rise and there is also the possibility that air bubbles are generated. Such generation of air bubbles in the rotational shaft not only adversely affects analysis, but may also have other adverse effects, such as wear of the contact portion of the pair of sliding rings.

As a third problem, there has been a case where liquid feeding of a liquid sample is not stable in a liquid feed pump for feeding the liquid sample to the centrifugal field-flow fractionation device depending on the pressure in the channel 161 of the channel member 16. Further, as a fourth problem, in a case, for example, a height of the pipe on a downstream side is higher than the channel 161, there has been the possibility that the liquid sample flows back.

The present invention is made in view of the above actual situations, and an object of the present invention is to provide a centrifugal field-flow fractionation device which can suppress deformation of a channel member. Further, another object of the present invention is to provide the centrifugal field-flow fractionation device in which air bubbles are not easily mixed into a liquid sample. Further, another object of the present invention is to provide the centrifugal field-flow fractionation device capable of stabilizing liquid feeding of the liquid sample. Further, another object of the present invention is to provide the centrifugal field-flow fractionation device capable of preventing backflow of a liquid sample.

### MEANS FOR SOLVING THE PROBLEMS

The centrifugal field-flow fractionation device according to the present invention includes an annular rotor, an arc-shaped channel member, a rotation drive unit, and a pressure increasing mechanism. The rotor rotates about a rotation axis. The channel member is provided along an inner peripheral surface of the rotor, and has an arc-shaped outer peripheral surface formed on the rotor side and an arc-shaped inner peripheral surface formed on the rotation axis side. Further, in the channel member, a channel of a liquid sample is formed inside, and an inlet for the liquid sample to the channel and an outlet for the liquid sample from the channel are formed. The rotation drive unit classifies particles in the liquid sample in the channel by a centrifugal force by rotating the rotor. The pressure increasing mechanism is provided downstream of the channel to increase the pressure in the channel.

According to such a configuration, pressure in the channel is increased by the action of the pressure increasing mechanism provided downstream of the channel. Accordingly, the liquid sample in the channel presses the inner surface of the channel outward, which can prevent the outer peripheral surface and the inner peripheral surface of the channel member from being recessed toward the channel side. In this manner, it is possible to suppress influence on the flow of the liquid sample in the channel due to deformation of the inner surface of the channel, and to prevent lowering in the classification performance.

Further, it is possible to remove air bubbles in the liquid sample by increasing the pressure in the channel. In this manner, air bubbles are less likely to be mixed in the liquid sample, and the air bubbles can be prevented from adversely affecting the analysis.

Furthermore, by applying a back pressure using the pressure increasing mechanism, it is possible to stabilize feeding of the liquid sample in the liquid feed pump for feeding the liquid sample to the centrifugal field-flow fractionation device. Further, depending on a configuration of the pressure increasing mechanism, the liquid sample can be made to flow little or not to flow from the downstream side to an upstream side, and backflow of the liquid sample can be prevented.

The pressure increasing mechanism may increase the pressure in the channel so as to maintain the outer peripheral surface and the inner peripheral surface in a shape extending straight along a direction parallel to the rotation axis.

According to such a configuration, the increase of the pressure in the channel by the pressure increasing mechanism maintains the outer peripheral surface and the inner peripheral surface of the channel member in a shape extending straight along a direction parallel to the rotation axis. Thus, deformation of the inner surface of the channel does not occur. Therefore, the flow of the liquid sample in the channel is not influenced by deformation of the inner surface of the channel, and it is possible to effectively prevent lowering in the classification performance.

The pressure increasing mechanism may include a resistance channel having an inner diameter smaller than that of the outlet.

According to such a configuration, the pressure in the channel can be increased with a simple configuration in which the resistance channel is provided downstream of the channel. By appropriately setting the inner diameter of the resistance channel according to a flow rate of the liquid sample supplied into the channel, the pressure in the channel can be set to an appropriate value, and deformation of the inner surface of the channel can be prevented.

The pressure increasing mechanism may include a pressure regulator which causes the liquid sample to flow into the downstream side when the pressure from the liquid sample on the upstream side becomes a certain value or more.

According to such a configuration, the pressure in the channel can be increased by a simple configuration in which the pressure regulator is provided downstream of the channel. In particular, regardless of a flow rate of the liquid sample supplied into the channel, the pressure in the channel can be maintained at a constant level by the pressure regulator, so that deformation of the inner surface of the channel can be reliably prevented. Further, in a case where the pressure regulator is used, it is possible to effectively prevent the backflow of the liquid sample.

The channel member may be formed of a hollow member in which the channel is formed inside by the outer peripheral surface and the inner peripheral surface formed integrally.

According to such a configuration, by forming the outer peripheral surface and the inner peripheral surface of the channel member integrally, the channel member can be configured as one hollow member in which the channel is formed inside. In this case, if the channel member is formed in a straight state and then deformed into an arc shape, the outer peripheral surface and the inner peripheral surface of the channel member may be recessed toward the channel side. However, by increasing the pressure in the channel by using the pressure increasing mechanism, it is possible to suppress the outer peripheral surface and the inner peripheral surface of the channel member from being recessed toward the channel side.

The channel member may be formed of a laminate formed of a plurality of layers jointed together, where the plurality of layers includes an outer surface layer on which the outer peripheral surface is formed and an inner surface layer on which the inner peripheral surface is formed.

According to such a configuration, by joining a plurality of layers including the outer surface layer and the inner surface layer to each other, it is possible to configure the channel member having a liquid-tight structure in which the channel is formed inside. In this case, since each layer is formed of a different member, if the layers are joined in a straight state and then deformed into an arc shape, the outer surface layer and the inner surface layer tend to be recessed toward the channel side. However, by increasing the pressure in the channel by using the channel increasing mechanism, it is possible to suppress the outer surface layer and the inner surface layer of the channel member from being recessed toward the channel side.

### EFFECTS OF THE INVENTION

According to the present invention, an inner surface of a channel is pressed outward by a liquid sample in the channel, and an outer peripheral surface and an inner peripheral surface of the channel member can be suppressed from being recessed toward the channel side. Further, according to the present invention, air bubbles in the liquid sample can be removed by increasing the pressure in the channel. Accordingly, air bubbles are less likely to be mixed in the liquid sample. Further, according to the present invention, liquid feeding of the liquid sample can be stabilized by applying back pressure using the pressure increasing mechanism. Further, according to the present invention, backflow of the liquid sample can be prevented depending on a configuration of the pressure increasing mechanism.

### BRIEF DESCRIPTION OF THE DRAWINGS

FIG. 1 is a schematic diagram showing a configuration example of an analysis system including a centrifugal field-flow fractionation device according to an embodiment of the present invention.
FIG. 2 is a schematic front view showing a configuration example of the centrifugal field-flow fractionation device.
FIG. 3 is an exploded perspective view showing a configuration example of a rotation unit.
FIG. 4 is a perspective view showing a configuration example of a wedge-shaped member.
FIG. 5 is an exploded perspective view showing a configuration example of the channel member, illustrating a state before the channel member is curved in an arc shape when viewed from an inner peripheral surface side.
FIG. 6A is a schematic cross-sectional view for explaining an example of a mode in which pressure in a channel of the channel member is increased.
FIG. 6B is a schematic cross-sectional view for explaining another example of the mode in which pressure in the channel of the channel member is increased.
FIG. 7A is a diagram showing an example of a detection result of a detector, illustrating a relationship between a detected intensity (vertical axis) and time (horizontal axis) in a case where the pressure in the channel is not increased by the pressure increasing mechanism.
FIG. 7B is a diagram showing an example of a detection result of a detector, illustrating a relationship between a detected intensity (vertical axis) and time (horizontal axis) in a case where the pressure in the channel is increased by the pressure increasing mechanism.
FIG. 8A is a schematic cross-sectional view showing an example of the pressure increasing mechanism.
FIG. 8B is a schematic cross-sectional view showing another example of the pressure increasing mechanism.
FIG. 9 is an exploded perspective view showing a first variation of the channel member, illustrating a state before the channel member is curved in an arc shape when viewed obliquely from an outer peripheral surface side.
FIG. 10 is a diagram for explaining a second variation of the channel member, and shows a configuration example of an intermediate layer in a plan view.
FIG. 11 is an exploded perspective view showing a third variation of the channel member, illustrating a state before the channel member is curved in an arc shape when viewed obliquely from the outer peripheral surface side.
FIG. 12 is a diagram for explaining a fourth variation of the channel member, and shows a configuration example of the intermediate layer in a plan view.
FIG. 13A is a schematic cross-sectional view showing an example of a mode in which the channel member is deformed.
FIG. 13B is a schematic cross-sectional view showing another example of a mode in which the channel member is deformed.

### MODE FOR CARRYING OUT THE INVENTION

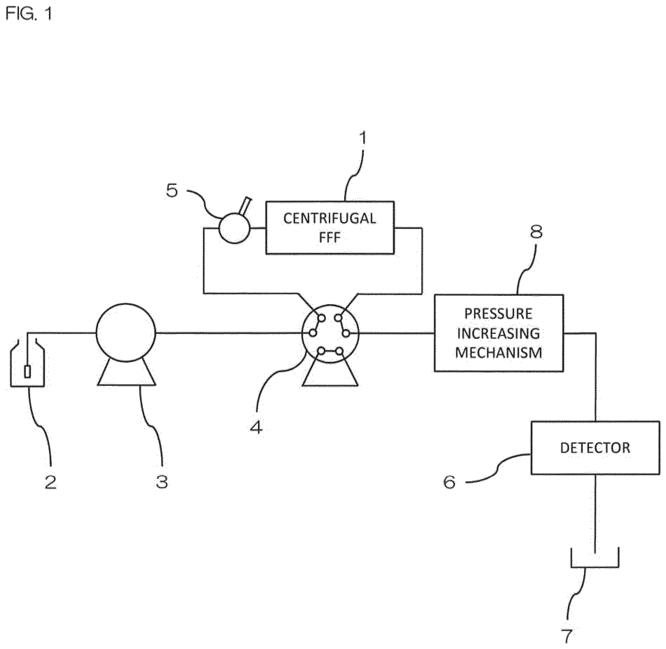

FIG. 1 is a schematic diagram showing a configuration example of an analysis system including a centrifugal field-flow fractionation device 1 according to an embodiment of the present invention. The centrifugal field-flow fractionation device 1 is a device for classifying particles contained in a liquid sample according to specific gravity using field-flow fractionation. The analysis system shown in FIG. 1 includes a carrier storage unit 2, a liquid feed pump 3, a rotary valve 4, a sample injection device 5, a detector 6, and a carrier collection unit 7, in addition to the centrifugal field-flow fractionation device 1.

The carrier storage unit 2 stores a carrier fluid made of, for example, water or an organic solvent. The carrier fluid is pumped out of the carrier storage unit 2 by the liquid feed pump 3 and supplied to the centrifugal field-flow fractionation device 1 through the rotary valve 4. The sample injection device 5 is provided between the rotary valve 4 and the centrifugal field-flow fractionation device 1, and the carrier fluid into which a sample is injected from the sample injection device 5 is supplied, as a liquid sample, to the centrifugal field-flow fractionation device 1.

The liquid sample contains a large number of particles to be analyzed. The particles contained in the liquid sample are classified by application of a centrifugal force in the centrifugal field-flow fractionation device 1 and flow out of the centrifugal field-flow fractionation device 1 at different timings according to the specific gravity. Particles that sequentially flow out of the centrifugal field-flow fractionation device 1 are sent to the detector 6 together with the carrier fluid via the rotary valve 4, and, after being detected by the detector 6, the particles are collected by the carrier collection unit 7. Start or stop of supply of the liquid sample to the centrifugal field-flow fractionation device 1 can be switched by rotation of the rotary valve 4.

In the present embodiment, a pressure increasing mechanism 8 for increasing pressure in the channel of the liquid sample in the centrifugal field-flow fractionation device 1 is provided downstream of the centrifugal field-flow fractionation device 1. In this example, although the pressure increasing mechanism 8 is provided between the centrifugal field-flow fractionation device 1 and the detector 6, the present invention is not limited to such a configuration, and the configuration may be such that the pressure increasing mechanism 8 is provided downstream of the detector 6 or in the inside of the detector 6.

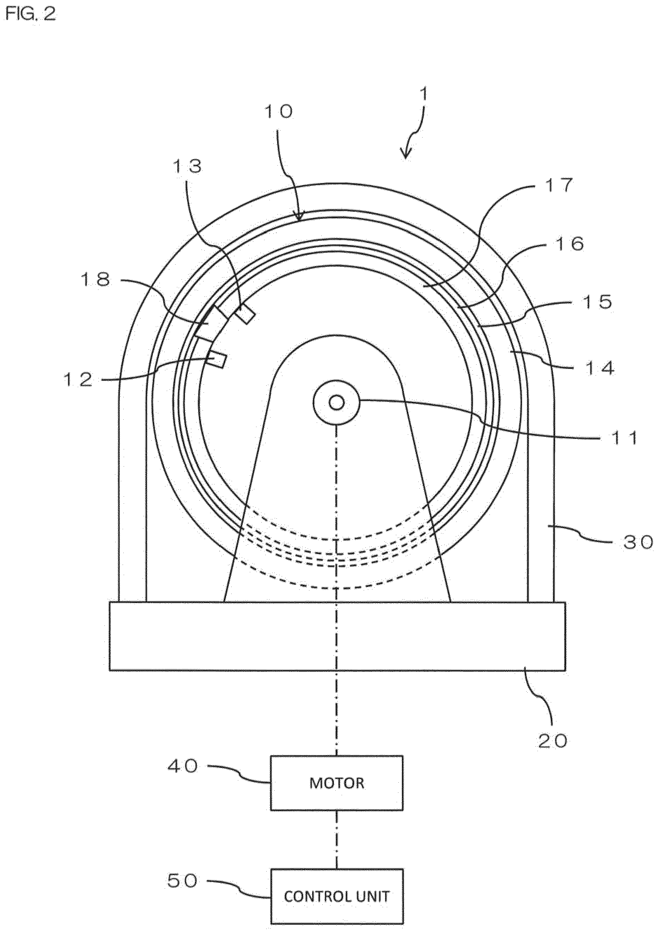

FIG. 2 is a schematic front view showing a configuration example of the centrifugal field-flow fractionation device 1. The centrifugal field-flow fractionation device 1 is configured by assembling a rotation unit 10 that rotates about a rotational shaft 11, a holding table 20 that rotatably holds the rotational shaft 11, and a protective wall 30 for preventing a worker being in contact with the rotating rotation unit 10.

The rotation unit 10 is formed in, for example, a cylindrical shape, and is held by the holding table 20 so that the rotational shaft 11 attached to a central portion of the rotation unit 10 extends in a horizontal direction. The protective wall 30 is, for example, a U-shaped member curved in a shape corresponding to an outer peripheral surface of the rotation unit 10, and is attached to the holding table 20 in a state of being opposed to the outer peripheral surface at a minute distance so as to cover the outer peripheral surface of the rotation unit 10.

The rotational shaft 11 is formed in a hollow shape, and a liquid sample is supplied into the rotational shaft 11 from, for example, one end of the rotational shaft 11. The rotation unit 10 is provided with an introduction unit 12 into which a liquid sample before being classified is introduced and a discharge unit 13 from which a liquid sample after being classified is drawn. The introduction unit 12 and the discharge unit 13 communicate with the inside of the rotational shaft 11 via a pipe (not shown). In this manner, the liquid sample supplied into the rotational shaft 11 is introduced from the introduction unit 12 to the rotation unit 10 through the pipe. After particles in the sample liquid are classified in the rotation unit 10, the liquid sample is introduced to the rotational shaft 11 from the discharge unit 13 through a pipe and sent to the detector 6.

A motor 40, which is an example of a rotation drive unit, is connected to the rotational shaft 11. By driving the motor 40, the rotation unit 10 can be rotated to apply a centrifugal force to the liquid sample in the rotation unit 10. The driving of the motor 40 is controlled by a control unit 50 including, for example, a central processing unit (CPU). However, the rotation unit 10 can also be rotated using a rotation drive unit other than the motor 40.

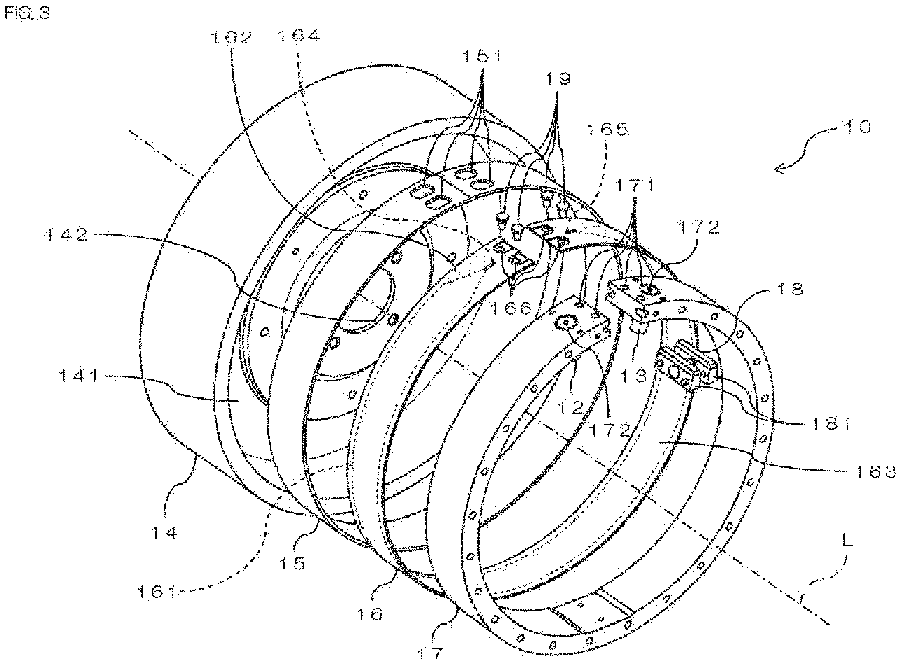

FIG. 3 is an exploded perspective view showing a configuration example of the rotation unit 10. The rotation unit 10 is configured as a cylindrical member as a whole by assembling, for example, a rotor 14, a spacer 15, a channel member 16, a fixing member 17, and the wedge-shaped member 18.

The rotor 14 is an annular member, and has one end face closed by an end face wall 141. The end face wall 141 is formed in a disk shape, and an insertion hole 142 for inserting the rotational shaft 11 is formed in a central portion of the end face wall 141. By inserting the rotational shaft 11 into the insertion hole 142 and fixing it to the end face wall 141, the rotor 14 can be rotated about a rotation axis L coaxial with the rotational shaft 11, along with rotation of the rotational shaft 11.

The spacer 15, the channel member 16, the fixing member 17, and the wedge-shaped member 18 are accommodated in space on an inner side (the rotation axis L side) of the rotor 14. The spacer 15, the channel member 16, and the fixing member 17 have a shape in which an elongated member is curved in an arc shape, and are fixed in a state of being stacked in this order along an inner peripheral surface of the rotor 14. A radius of curvature of the spacer 15, the channel member 16, and the fixing member 17 is, for example, about 50 to 200 mm.

The channel member 16 is, for example, a thin plate having a thickness of 1 mm or less, and is formed in a C shape with both ends in a circumferential direction facing each other with space between them. A channel 161 extending in a circumferential direction is formed in the inside of the channel member 16. That is, the channel member 16 has an arc-shaped outer peripheral surface 162 formed on the rotor 14 side, and an arc-shaped inner peripheral surface 163 formed on the rotation axis L side. The channel 161 is formed between the outer peripheral surface 162 and the inner peripheral surface 163.

An inlet 164 for the liquid sample to the channel 161 is formed at one circumferential end on the inner peripheral surface 163 of the channel member 16. On the other hand, an outlet 165 for the liquid sample from the channel 161 is formed at the other circumferential end on the inner peripheral surface 163 of the channel member 16. In this manner, the liquid sample flowing from the inlet 164 into the channel 161 flows in the channel 161 along the circumferential direction from one end to the other end, and flows out from the outlet 165.

When classification of the particles in the liquid sample is performed, first, the rotation unit 10 is rotated by the drive of the motor 40, and a rotation speed of the rotation unit 10 is gradually increased. Then, when the rotation speed of the rotation unit 10 reaches a certain value (for example, 5000 rpm), the liquid sample is injected from the inlet 164 in a state where the rotation speed is maintained.

After the liquid sample is injected into the channel 161 for a certain period of time, the supply of the liquid sample is stopped by switching of the rotary valve 4 and the rotation unit 10 is continuously rotated. In this manner, particles in the liquid sample in the channel 161 are centrifugally settled. After the above, the supply of the liquid sample is resumed by switching of the rotary valve 4, and the rotation speed of the rotation unit 10 is gradually lowered after a certain period of time.

In this manner, particles in the liquid sample are sent to the downstream side, from a particle having a smallest specific gravity to the one having a largest specific gravity, along with the flow of the liquid sample in the channel 161 and sequentially flow out from the outlet 165. In this manner, the particles in the liquid sample in the channel 161 are classified by a centrifugal force, flow out from the outlet 165 at different timings according to the specific gravity, and are sent to the detector 6.

The fixing member 17 is a member having a thickness larger than that of the channel member 16 and is formed to have a thickness of, for example, about 10 mm. Like the channel member 16, the fixing member 17 is formed in a C-shape by with both ends in the circumferential direction facing each other with space between them. A circumferential length of the fixing member 17 substantially matches with a circumferential length of the channel member 16. The fixing member 17 is provided along the inner peripheral surface 163 of the channel member 16 on the inner side (rotation axis L side) of the channel member 16.

At both ends in the circumferential direction of the fixing member 17, a plurality of screw holes 171 for screwing in a bolt 19 which is an example of a locking tool are formed. At both ends in the circumferential direction of the channel member 16, a plurality of insertion holes 166 is formed at positions facing the screw holes 171 of the fixing member 17. In this manner, the channel member 16 can be attached to the fixing member 17 by inserting the bolt 19 from the outside into each of the insertion holes 166 and screwing it into each of the screw holes 171. However, the locking tool is not limited to the bolt 19, but may be formed of other members, such as a pin.

Further, through-holes 172 are formed at both ends in the circumferential direction of the fixing member 17 at positions facing the inlet 164 and the outlet 165 formed on the inner peripheral surface 163 of the channel member 16. The introduction unit 12 and the discharge unit 13 are attached to the inner peripheral surface of the fixing member 17 so as to communicate with the through-holes 172. In this manner, the liquid sample introduced from the introduction unit 12 flows into the channel 161 from the inlet 164 via one of the through-holes 172, flows in the channel 161 in the circumferential direction, and then is discharged from the outlet 165 through the other one of through-holes 172 and the discharge unit 13.

The channel 161 in the channel member 16 is set to have a different height according to a type of a carrier fluid, a condition of analysis, and the like. For this reason, the channel member 16 is formed to have a different thickness according to the height of the channel 161, and an optimal one of the channel members 16 is selected from a plurality of types of the channel members 16 and attached to the fixing member 17.

The fixing member 17 to which the channel member 16 is attached as described above is inserted into space inside the rotor 14, and is fixed along the inner peripheral surface of the rotor 14 in such a manner that the channel member 16 is sandwiched between the fixing member 17 and the rotor 14. At this time, with the wedge-shaped member 18 attached between both ends of the C-shaped fixing member 17, a force is applied in a direction in which the both ends are expanded.

In this manner, the C-shaped fixing member 17 is strongly pressed to the inner peripheral surface side of the rotor 14, and the channel member 16 is pressed and fixed to the rotor 14 side. When particles in the liquid sample are classified, the rotor 14 is rotated at high speed, so that the inside of the channel 161 has high pressure (for example, about 1 MPa), and a pressure difference between the inside and outside of the channel 161 becomes large. However, by the channel member 16 sandwiched between the fixing member 17 and the rotor 14, the outer peripheral surface 162 and the inner peripheral surface 163 of the channel member 16 can be prevented from being deformed to an opposite side to the channel 161 side due to the pressure difference.

In the present embodiment, the spacer 15 is sandwiched between the channel member 16 and the rotor 14. Although a material of the spacer 15 is not particularly limited, the spacer 15 is made from, for example, resin, such as polyethylene terephthalate (PET), or metal. The spacer 15 is formed to be slightly longer than the channel member 16, and long holes 151 are formed at both ends in the circumferential direction at positions facing the insertion holes 166 of the channel member 16.

A head portion of the bolt 19 inserted into each of the insertion holes 166 of the channel member 16 is accommodated in each of the long holes 151 of the spacer 15. Each of the long holes 151 is formed to extend in the circumferential direction. In this manner, in a state where the head portion of each of the bolts 19 is accommodated in each of the long holes 151, when both ends of the fixing member 17 are expanded by the wedge-shaped member 18 and the fixing member 17 is strongly pressed against the inner peripheral surface side of the rotor 14, the spacer 15 and the channel member 16 are sandwiched between the fixing member 17 and the rotor 14 while the head portion of each of the bolts 19 slides in the circumferential direction in each of the long holes 151.

The spacer 15 is, for example, thin plate-like and has a thickness of 1 mm or less, and one having a different thickness depending on the thickness of the channel member 16 is selected. That is, the spacer 15 having an optimum thickness is selected, so that a total value of the thickness of the spacer 15 and the thickness of the channel member 16 is substantially constant. Further, the spacer 15 also has a function of preventing damage to the inner peripheral surface of the rotor 14. However, the spacer 15 can be omitted.

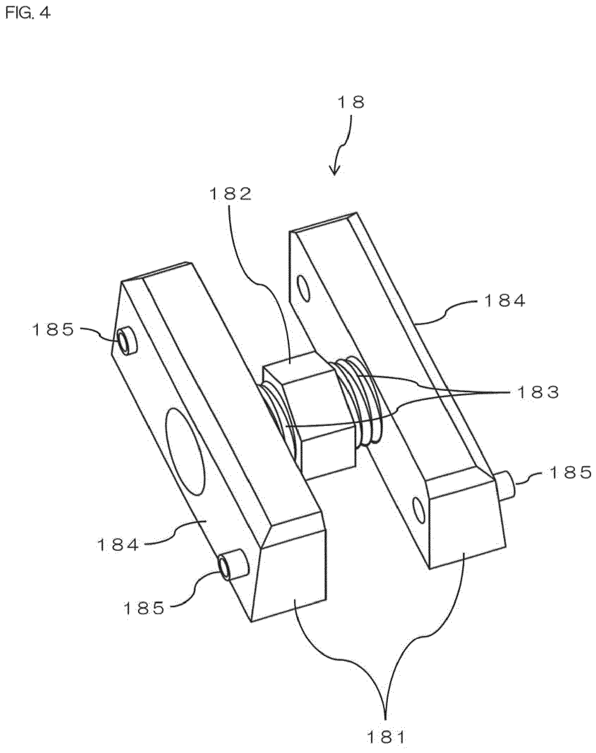

FIG. 4 is a perspective view showing a configuration example of the wedge-shaped member 18. The wedge-shaped member 18 includes, for example, two nut portions 181 and one bolt portion 182. The bolt portion 182 has two shaft portions 183 extending in opposite directions along an axial direction. One of the shaft portions 183 is formed with a right-handed screw, and the other one of the shaft portions 183 is formed with a left-handed screw.

The two nut portions 181 face each other with the bolt portion 182 interposed between them. One of the shaft portions 183 of the bolt portion 182 is screwed into one of the nut portions 181, and the other shaft portion 183 of the bolt portion 182 is screwed into the other nut portion 181. Therefore, rotating the bolt portion 182 in one direction allows the two nut portions 181 to approach each other, and rotating the bolt portion 182 in the opposite direction allows the two nut portions 181 to be separated from each other.

The wedge-shaped member 18 is provided between both ends of the C-shaped fixing member 17, and surfaces of the nut portions 181 opposite to those on the bolt portion 182 side constitute abutting surfaces 184 that abut against both ends of the fixing member 17. Therefore, by rotating the bolt portion 182 in a state in which the abutting surfaces 184 abut against both ends of the fixing member 17, and expanding or contracting a distance between the both ends of the fixing member 17, a pressing force of the fixing member 17 against the rotor 14 side can be adjusted, or the fixing member 17 can be attached and detached.

The abutting surface 184 of each of the nut portions 181 is formed by a tapered surface that gradually tapers toward the outer side (the rotor 14 side). Both ends of the fixing member 17 abutting against the abutting surfaces 184 are also formed by tapered surfaces so that the ends are gradually closer to each other toward the outer side (the rotor 14 side).

Therefore, when the distance between both ends of the fixing member 17 is increased by rotating the bolt portion 182 to separate the two nut portions 181 from each other in a state where the wedge-shaped member 18 is provided between both ends of the fixing member 17, the abutting surfaces 184 of the nut portions 181 press both ends of the fixing member 17 toward the outer side (the rotor 14 side). In this manner, the fixing member 17 can be pressed against the rotor 14 side with a higher pressing force.

One or a plurality of projections 185 is formed on the abutting surface 184 of each of the nut portions 181, and the projections 185 are locked with recesses (not shown) formed on both ends of the fixing member 17. In this manner, the wedge-shaped member 18 is positioned between both ends of the fixing member 17. However, the configuration may be such that recesses are formed in the wedge-shaped member 18 side, and projections are formed in the fixing member 17 side. Further, the configuration of the wedge-shaped member 18 is not limited to the above configuration, and other optional configurations may be employed as long as the wedge-shaped member can be fixed in a manner pressing the fixing member 17 to the rotor 14 side.

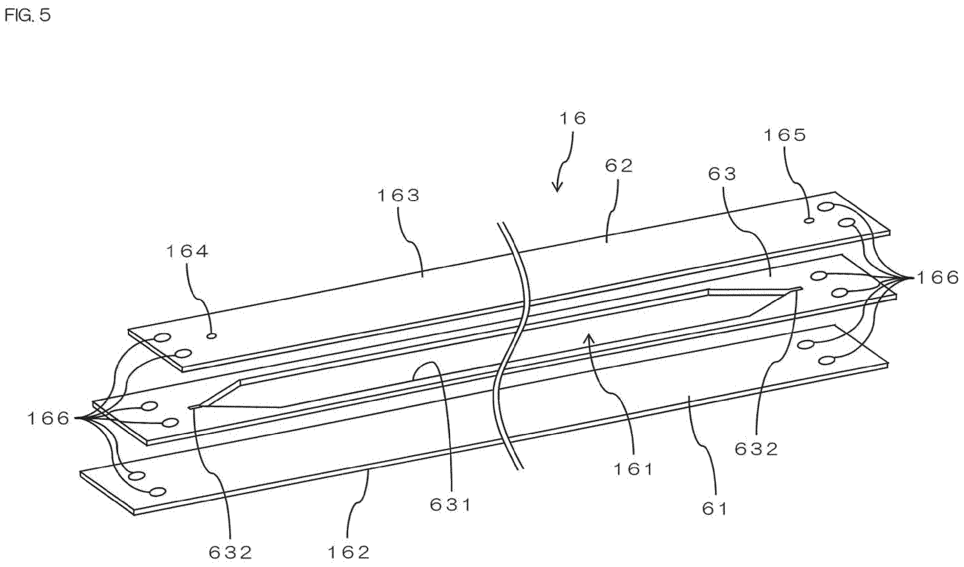

FIG. 5 is an exploded perspective view showing a configuration example of the channel member 16, illustrating a state before the channel member 16 is curved in an arc shape when viewed from the inner peripheral surface 163 side. The channel member 16 is formed of, for example, a laminate having a three-layer structure in which an outer surface layer 61, an inner surface layer 62, and an intermediate layer 63 are stacked. The intermediate layer 63 is provided between the outer surface layer 61 and the inner surface layer 62. Each of the layers 61, 62, and 63 is formed of, for example, stainless steel (SUS), and has a thickness of about 0.25 mm.

The surface of the outer surface layer 61 on the opposite side to the intermediate layer 63 side constitutes the outer peripheral surface 162 of the channel member 16 when the channel member 16 is curved in an arc shape. Further, the surface of the inner surface layer 62 on the opposite side to the intermediate layer 63 side constitutes the inner peripheral surface 163 of the channel member 16 when the channel member 16 is curved in an arc shape.

On the intermediate layer 63, an opening 631 extending through the intermediate layer 63 and extending straight in a longitudinal direction is formed. The opening 631 can be formed by, for example, etching or electrical discharge machining. Both ends in the longitudinal direction of the opening 631 are formed in a triangular shape that gradually tapers, and each end is an elongated port portion 632 which projects in the longitudinal direction.

The intermediate layer 63 is sandwiched between the outer surface layer 61 and the inner surface layer 62, and the outer and inner sides of the opening 631 (including the port portions 632) are closed, so that the channel 161 is formed between the outer surface layer 61 and the inner surface layer 62. The channel member 16 integrally formed in this manner is curved in an arc shape having an inner diameter substantially the same as an outer diameter of the fixing member 17 using a bending roll (a bending machine for a sheet metal) or the like.

The inlet 164 and the outlet 165 are formed at positions facing the port portions 632 on the inner surface layer 62. In this manner, in a state where the layers 61, 62, and 63 are stacked, the inlet 164 and the outlet 165 communicate with the channel 161 from the port portions 632. Through-holes are formed at positions facing each other at both ends in the longitudinal direction on the layers 61, 62, and 63, and these through-holes constitute insertion holes 166 for inserting the bolt 19.

In the present embodiment, a plurality of layers, the outer surface layer 61, the inner surface layer 62, and the intermediate layer 63, are joined to one another to constitute a laminate. That is, the outer surface layer 61 is joined to the intermediate layer 63, and the inner surface layer 62 is joined to the intermediate layer 63. In this manner, the outer peripheral surface 162 and the inner peripheral surface 163 of the channel member 16 are integrally formed, and the channel member 16 is configured as one hollow member in which the channel 161 is formed.

In this manner, pressure resistance performance of the channel member 16 is improved, and generation of a gap in the channel 161 can be prevented even in a case where pressure in the channel 161 is high or in a case where the rotation speed of the rotor 14 is high, and also lowering in sealing property due to a secular change is not generated. Accordingly, the liquid sample is unlikely to leak out of the channel 161. Further, since the channel member 16 can be handled as one member, it is possible to attach and detach the channel member 16 at one time without paying attention to adhesion of dirt and the like in the channel 161, which facilitates attaching and detaching work of the channel member 16.

Further, in the present embodiment, the channel member 16 can be pressed to the rotor 14 side by the fixing member 17 so as to be fixed firmly. The channel member 16 has a liquid-tight structure as a single member in which the channel 161 is formed, and therefore, it is not necessary to increase the pressing force from the fixing member 17 to the channel member 16 as high as that in a conventional configuration. As a result, sealing performance degradation due to deformation of the channel member 16 is not caused, and the liquid sample hardly leaks out of the channel 161.

In particular, in the present embodiment, a plurality of layer, the outer surface layer 61, the inner surface layer 62, and the intermediate layer 63, are joined to one another, so that the channel member 16 having a liquid-tight structure in which the channel 161 is formed can be constituted. In this manner, by forming the channel 161 by combining a plurality of layers, the degree of freedom in the shape of the channel 161 can be increased.

The layers 61, 62, and 63 can be joined together, for example, by diffusion bonding. Diffusion bonding is a method of joining by using diffusion of atoms generated between joined surface by heating and pressurizing of the layers 61, 62, and 63 under a temperature condition at or lower than a melting point in a state in which the layers 61, 62, and 63 are in close contact. By using this diffusion bonding, the layers 61, 62, and 63 can be firmly joined to each other by joining of atoms.

In a case where the layers 61, 62, and 63 are joined, if an attempt is made to join the layers 61, 62, and 63 after deforming them in an arc shape, shapes of the layers 61, 62, and 63 vary, and it is difficult to join the layers in an excellent manner. Accordingly, the layers 61, 62, and 63 are preferably deformed in an arc shape after being joined in a straight state. Even in such a case, if the layers 61, 62, and 63 are firmly joined using diffusion bonding, the layers 61, 62, and 63 do not easily come off when deformed in an arc shape. Accordingly, the liquid sample hardly leaks from the inside of the channel 161.

Further, in a case where diffusion bonding is used, no irregular shape is generated at a joined portion. Accordingly, the joined portion does not influence the flow of the liquid sample in the channel 161, and lowering in classification performance can be prevented. However, joining of the layers 61, 62, and 63 is not limited to diffusion bonding, but can be performed by other methods, such as brazing, welding, or heat fusion.

In the present embodiment, since a plurality of the layers 61, 62, and 63 constituting a wall surface of the channel 161 is formed of the same kind of material (for example, stainless steel), influence that a state of the wall surface of the channel 161 has on classification performance can be easily predicted. Further, the layers 61, 62, and 63 formed of the same kind of material are easily joined since they are thermally deformed in a similar mode at the time of joining under a high temperature as in, for example, diffusion joining and the like, and the layers 61, 62, and 63 hardly come off even when the layers are cooled after being joined. Therefore, the liquid sample is even less likely to leak out of the channel 161.

However, the layers 61, 62, and 63 may be formed of other metal without limitation to stainless steel, and may be formed of a material other than metal. In a case where the layers 61, 62, and 63 are formed of metal, the layers 61, 62, and 63 can be joined by, for example, diffusion bonding, brazing, or welding. On the other hand, in a case where the layers 61, 62, are 63 are formed of resin, the layers 61, 62, and 63 can be joined, for example, by heat fusion.

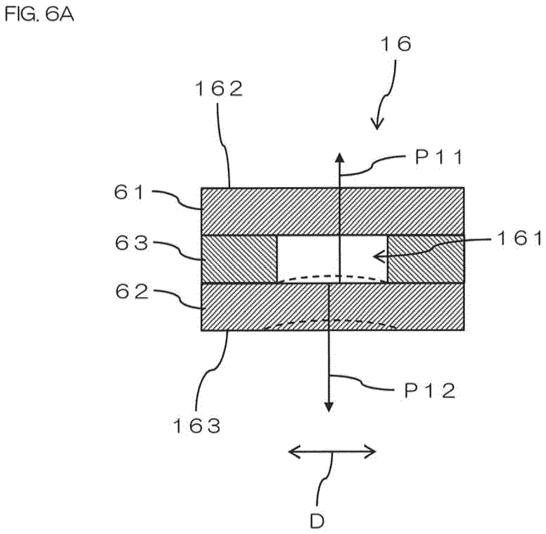

FIG. 6A is a schematic cross-sectional view for explaining an example of a mode in which pressure in the channel 161 of the channel member 16 is increased. This example describes, as described with reference to FIG. 13A, a case where the outer surface layer 61 and the inner surface layer 62 are not recessed toward the channel 161 side when the channel member 16 is deformed in an arc shape.

In this case, as shown by a broken line in FIG. 6A, the inner surface layer 62 among the outer surface layer 61, the inner surface layer 62, and the intermediate layer 63 forming the channel 161 has a shape recessed in an arc shape toward the channel 161 side by a centrifugal force when the rotor 14 rotates. In the present embodiment, the pressure increasing mechanism 8 increases pressure in the channel 161 so that a force P12 at the same degree as a centrifugal force P11 acting on the inner surface layer 62 acts in the opposite direction to the centrifugal force P11 on the inner surface layer 62.

In this manner, as shown by a solid line in FIG. 6A, the outer peripheral surface 162 and the inner peripheral surface 163 of the channel member 16 can be maintained in a shape extending straight along a direction D parallel to the rotation axis L. Since the outer peripheral surface of the fixing member 17 is in contact with the inner side of the inner surface layer 62 (the side opposite to the intermediate layer 63 side), the inner surface layer 62 is not deformed inward even if the force P12 acting on the inner surface layer 62 from inside the channel 161 is larger than the centrifugal force P11. Therefore, the force P12 is preferably larger than the centrifugal force P11. However, in a case where the pressure in the channel 161 is too high, the liquid sample is likely to leak out from the channel 161. For this reason, the force P12 is preferably at the same degree as the centrifugal force P11.

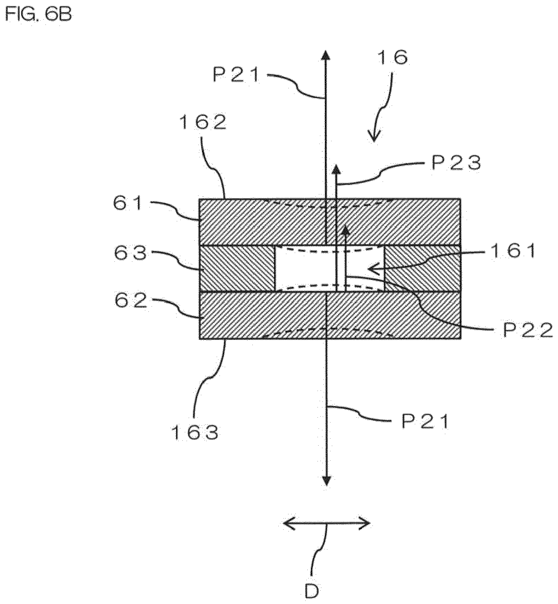

FIG. 6B is a schematic cross-sectional view for explaining another example of the mode in which pressure in the channel 161 of the channel member 16 is increased. This example describes, as described with reference to FIG. 13B, a case where the outer surface layer 61 and the inner surface layer 62 are recessed toward the channel 161 side when the channel member 16 is deformed in an arc shape.

In the present embodiment, the channel member 16 is configured as one hollow member in which the channel 161 is formed. For this reason, when the channel member 16 is formed in a straight state and then deformed into an arc shape, the outer peripheral surface and the inner peripheral surface of the channel member 16 may be recessed in an arc shape toward the channel 161 side as indicated by a broken line in FIG. 6B. In particular, in a case where the channel member 16 having a liquid-tight structure in which the channel 161 is formed is configured by joining a plurality of layers, including the outer surface layer 61 and the inner surface layer 62, to each other as in the present embodiment, if the layers are deformed into an arc shape after the layers are joined in a straight state, the outer surface layer 61 and the inner surface layer 62 tend to be recessed toward the channel 161 side, since the layers are formed of different members.

Therefore, in the present embodiment, the pressure in the channel 161 is increased by the pressure increasing mechanism 8. In this manner, a force P21 is applied to the outer surface layer 61 and the inner surface layer 62 from the inside of the channel 161 so as to maintain the outer surface layer 61 and the inner surface layer 62 in a shape extending straight along the direction D parallel to the rotation axis L as shown by a solid line in FIG. 6B. The force P21 is, for example, at the same degree as the sum of a reaction force P22 when the inner surface layer 62 is deformed inward (to the side opposite to the intermediate layer 63 side) and a centrifugal force P23 acting on the inner surface layer 62.

Since the outer peripheral surface of the fixing member 17 is in contact with the inner side of the inner surface layer 62, even if the force P21 acting on the inner surface layer 62 from the inside of the channel 161 is larger than the sum of the reaction force P22 and the centrifugal force P23, the inner surface layer 62 does not deform inward. Therefore, the force P21 is preferably larger than the sum of the reaction force P22 and the centrifugal force P23. However, in a case where the pressure in the channel 161 is too high, the liquid sample is likely to leak out from the channel 161. For this reason, the force P21 is preferably at the same degree as the sum of the reaction force P22 and the centrifugal force P23.

As described above, in the present embodiment, pressure in the channel 161 is increased by the action of the pressure increasing mechanism 8 provided downstream of the channel 161. Accordingly, the liquid sample in the channel 161 presses the inner surface of the channel 161 outward, which can prevent the outer peripheral surface 162 and the inner peripheral surface 163 of the channel member 16 from being recessed toward the channel 161 side. In this manner, influence on the flow of the liquid sample in the channel 161 due to deformation of the inner surface of the channel 161 is suppressed, and it is possible to prevent lowering in the classification performance.

In particular, the pressure in the channel 161 is increased by the pressure increasing mechanism 8 so that an appropriate force as illustrated in FIGS. 6A and 6B acts. In this manner, the outer peripheral surface 162 and the inner peripheral surface 163 of the channel member 16 are maintained in a shape extending straight along the direction D parallel to the rotation axis L. Thus, deformation of the inner surface of the channel 161 does not occur. Therefore, the flow of the liquid sample in the channel 161 is not influenced by deformation of the inner surface of the channel 161, and it is possible to effectively prevent lowering in the classification performance.

Further, it is possible to remove air bubbles in the liquid sample by increasing the pressure in the channel 161. That is, although the channel 161 formed in the channel member 16 has a flat shape and has a sealed structure having a long shape along the circumferential direction, air bubbles can be easily released from the inside of the channel 161 by increasing the pressure in the channel 161. Further, by increasing the pressure in the channel 161, air bubbles are less likely to be generated in the rotational shaft 11, a pipe through which the introduction unit 12 and the discharge unit 13 communicate with the inside of the rotational shaft 11, or the like. In this manner, air bubbles are less likely to be mixed in the liquid sample, and the air bubbles can be prevented from adversely affecting the analysis.

Furthermore, by applying a back pressure using the pressure increasing mechanism 8, it is possible to stabilize feeding of the liquid sample in the liquid feed pump 3 for feeding the liquid sample to the centrifugal field-flow fractionation device 1. Further, even in a case that, for example, a height of a pipe downstream of the channel 161 is high, depending on a configuration of the pressure increasing mechanism 8, the liquid sample can be made to flow little or not to flow from the downstream side to an upstream side, and backflow of the liquid sample can be prevented.

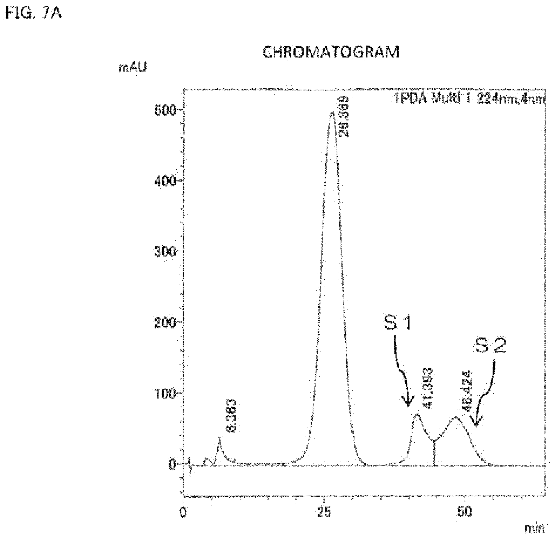

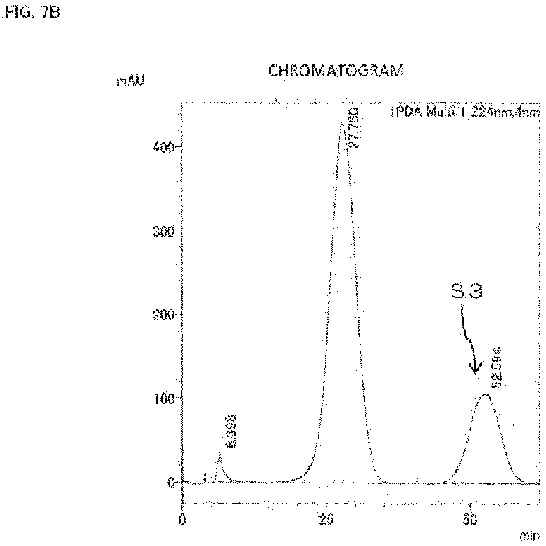

FIGS. 7A and 7B are diagrams showing an example of a detection result of the detector 6. FIG. 7A illustrates a relationship between a detected intensity (vertical axis) and time (horizontal axis) in a case where the pressure in the channel 161 is not increased by the pressure increasing mechanism 8. FIG. 7B illustrates a relationship between a detected intensity (vertical axis) and time (horizontal axis) in a case where the pressure in the channel 161 is increased by the pressure increasing mechanism 8.

As shown in FIG. 7A, in a case where the pressure in the channel 161 is not increased by the pressure increasing mechanism 8, a peak is divided into a plurality of peaks S1 and S2, where there should originally be one peak, and what is called peak cracking occurs. On the other hand, as shown to FIG. 7B, in a case where the pressure in the channel 161 is increased by the pressure increasing mechanism 8, the peak cracking does not occur, and one peak S3 is detected in a normal shape.

The pressure increased by the action of the pressure increasing mechanism 8 is preferably 0.1 to 1 MPa, and more preferably 0.2 to 0.5 MPa. Note that the example shown in FIG. 7B shows a case where the pressure is increased by 0.3 MPa by the action of the pressure increasing mechanism 8.

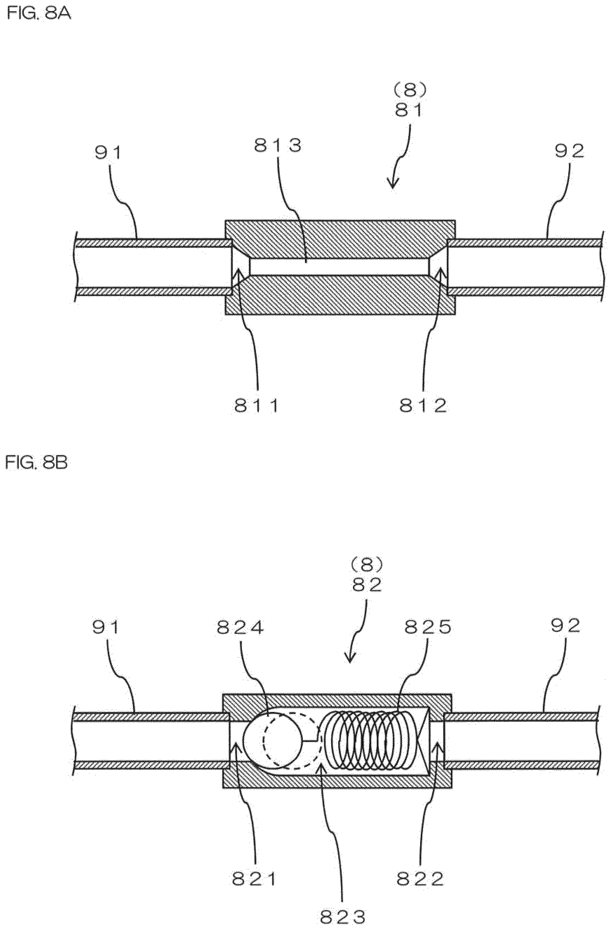

FIG. 8A is a schematic cross-sectional view showing an example of the pressure increasing mechanism 8. In this example, a resistance pipe 81 as the pressure increasing mechanism 8 is provided between a pipe 91 extending downstream from the centrifugal field-flow fractionation device 1 and a pipe 92 extending upstream from the detector 6 side.

In the resistance pipe 81, an entrance 811 connected to the pipe 91, an exit 812 connected to the pipe 92, and a resistance channel 813 provided between the entrance 811 and the exit 812 are formed. The entrance 811 and the exit 812 have an inner diameter equal to or larger than the outlet 165 of the channel member 16 in the centrifugal field-flow fractionation device 1. On the other hand, since the resistance channel 813 has an inner diameter smaller than the outlet 165 of the channel member 16, the resistance channel 813 acts as a resistor for the liquid sample flowing from the centrifugal field-flow fractionation device 1 side, and the pressure in the channel 161 of the channel member 16 is increased.

In the example of FIG. 8A, the pressure in the channel 161 can be increased by a simple configuration in which the resistance channel 813 is provided downstream of the channel 161. By appropriately setting the inner diameter of the resistance channel 813 according to a flow rate of the liquid sample supplied into the channel 161, the pressure in the channel 161 can be set to an appropriate value. Accordingly, deformation of an inner surface of the channel 161 can be prevented.

FIG. 8B is a schematic cross-sectional view showing another example of the pressure increasing mechanism 8. In this example, a pressure regulator 82 as the pressure increasing mechanism 8 is provided between the pipe 91 extending downstream from the centrifugal field-flow fractionation device 1 and the pipe 92 extending upstream from the detector 6 side.

The pressure regulator 82 includes an entrance 821 connected to the pipe 91, an exit 822 connected to the pipe 92, and a pressure control chamber 823 provided between the entrance 821 and the exit 822. The pressure control chamber 823 has an inner diameter larger than the entrance 821 and the exit 822 and is internally provided with a ball 824, a compression spring 825, and the like.

The compression spring 825 is a biasing member that biases the ball 824 toward the entrance 821 side. In this manner, when the pressure from the liquid sample on the upstream side of the pressure control chamber 823 does not reach a certain value (for example, 0.3 MPa), a boundary between the entrance 821 and the pressure control chamber 823 is blocked by the ball 824, and the liquid sample does not flow in the pressure control chamber 823. The certain value can be set optionally according to a biasing force of the compression spring 825.

On the other hand, when the pressure from the liquid sample on the upstream side of the pressure control chamber 823 reaches a certain value or more, the pressure of the liquid sample pushes the ball 824 to the exit 822 side against the biasing force of the compression spring 825 as shown by a broken line in FIG. 8B. As a result, the boundary between the entrance 821 and the pressure control chamber 823 is opened, and the liquid sample flows through the pressure control chamber 823 to the downstream side. As described above, the ball 824 and the compression spring 825 constitute an open/close mechanism for opening and closing the channel for the liquid sample.

In the example of FIG. 8B, the pressure in the channel 161 can be increased by a simple configuration in which the pressure regulator 82 is provided downstream of the channel 161. In particular, regardless of a flow rate of the liquid sample supplied into the channel 161, the pressure in the channel 161 can be maintained to be constant by the pressure regulator 82, so that deformation of the inner surface of the channel 161 can be reliably prevented. Further, in a case where the pressure regulator 82 is used, the flow of the liquid sample from the downstream side to the upstream side can be blocked by the ball 824, so that the backflow of the liquid sample can be effectively prevented.

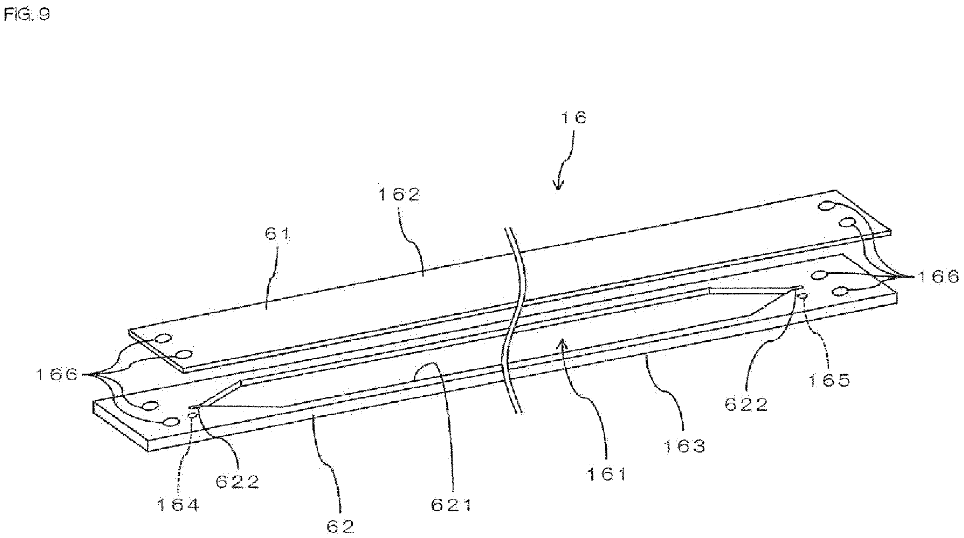

FIG. 9 is an exploded perspective view showing a first variation of the channel member 16, illustrating a state before the channel member 16 is curved in an arc shape when viewed obliquely from the outer peripheral surface 162 side. The channel member 16 in this example is formed of, for example, a laminate of a two-layer structure in which the outer surface layer 61 and the inner surface layer 62 are stacked. Each of the layers 61 and 62 is formed of, for example, stainless steel (SUS), and the outer surface layer 61 has a thickness of about 0.25 mm, and the inner surface layer 62 has a thickness of about 0.5 mm.

The surface of the outer surface layer 61 on the opposite side to the inner surface layer 62 side constitutes the outer peripheral surface 162 of the channel member 16 when the channel member 16 is curved in an arc shape. Further, the surface of the inner surface layer 62 on the opposite side to the outer surface layer 61 side constitutes the inner peripheral surface 163 of the channel member 16 when the channel member 16 is curved in an arc shape.

The inner surface layer 62 is formed with a recess 621 extending straight in the longitudinal direction. The recess 621 is dug on the surface of the inner surface layer 62 by, for example, half etching, and does not penetrate the inner surface layer 62. The recess 621 is formed to have a depth of about half the thickness of the inner surface layer 62 (for example, about 0.25 mm). Both ends in the longitudinal direction of the recess 621 are formed in a gradually tapered triangle shape, and each end is an elongated port portion 622 protruding in the longitudinal direction.

The outer surface layer 61 and the inner surface layer 62 are joined to each other, and the recess 621 (including the port portion 622) is closed with the outer surface layer 61, so that the channel 161 is formed between the outer surface layer 61 and the inner surface layer 62. The channel member 16 integrally formed in this manner is curved in an arc shape having an inner diameter substantially the same as the outer diameter of the fixing member 17 using a bending roll or the like.

At the tip of each of the port portions 622, the inlet 164 and the outlet 165 are formed to penetrate the inner surface layer 62. In this manner, in a state where the layers 61 and 62 are stacked, the inlet 164 and the outlet 165 communicate with the channel 161 from the port portions 622. Through-holes are formed at positions facing each other at both ends in the longitudinal direction on the layers 61 and 62, and these through-holes constitute the insertion holes 166 for inserting the bolt 19.

However, the configuration is not limited to the configuration in which the recess 621 is formed on the inner surface layer 62, and may be that in which the recess 621 is formed on the outer surface layer 61. In this case, the configuration may be such that the inlet 164 and the outlet 165 are only formed on the inner surface layer 62 at positions facing the port portions 622 of the recess 621 formed on the outer surface layer 61.

As in the example of FIG. 9, the structure of the channel member 16 is not limited to a three-layer structure but may be a two-layer structure. Further, it is also possible to configure the channel member 16 by a laminate of four or more layers. That is, the intermediate layer 63 provided between the outer surface layer 61 and the inner surface layer 62 may be formed of a plurality of layers instead of one layer.

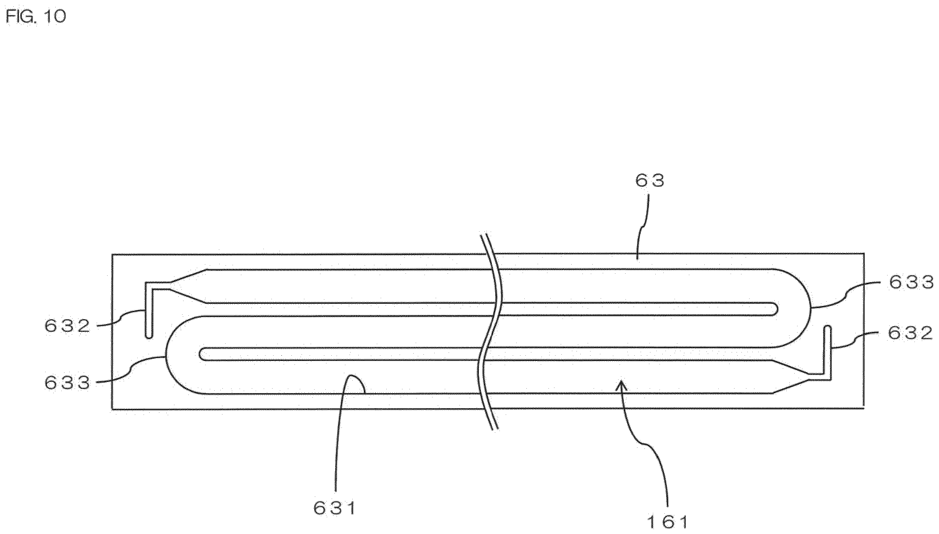

FIG. 10 is a diagram for explaining a second variation of the channel member 16, and shows a configuration example of the intermediate layer 63 in a plan view. In this example, the configuration is not such that the opening 631 extends straight in the longitudinal direction, but that a curved portion 633 is formed in part of the opening 631 so that a flowing direction of the liquid sample flowing in the channel 161 is changed.

Specifically, the channel 161 is folded at the curved portion 633 such that the flowing direction of the liquid sample is changed by 180° in a plane parallel to the outer peripheral surface 162 and the inner peripheral surface 163 (in a plane parallel to the intermediate layer 63). Each of the port portions 632 provided at both ends of the opening 631 elongates to a position where a tip of the port portion 632 faces the inlet 164 or the outlet 165.

In this manner, the flowing direction of the liquid sample can be changed at the curved portion 633 to form the long channel 161, and the classification performance can be improved. Further, in a case where the channel 161 of a complicated shape having the curved portion 633 is to be formed by a laminated structure, it becomes extremely difficult to handle each layer (in this example, the intermediate layer 63) individually. However, by configuring the channel member 16 as one integrally formed member, the mounting and dismounting work of the channel member 16 becomes extremely easy.

In this example, two of the curved portions 633 are provided. However, three or more of the curved portions 633 may be provided. Further, a shape of the curved portion 633 is not limited to a shape that changes the flowing direction of the liquid sample by 180°, and may be a shape that changes the flowing direction of the liquid sample by other angles. Furthermore, even if the flowing direction of the liquid sample is changed not by the curved portion 633 but by a bent portion, a similar effect can be obtained.

FIG. 10 describes the configuration in which the opening 631 having the curved portion 633 is formed on the intermediate layer 63 of the channel member 16 having a three-layer structure. However, the configuration is not limited to such a configuration, and may be, for example, a configuration in which the recess 621 having a curved portion or a bent portion is formed on the outer surface layer 61 or the inner surface layer 62 of the channel member 16 having a two-layer structure as shown in FIG. 9. Further, the configuration may be one in which the opening 631 having a curved portion or a bent portion is formed in a plurality of the intermediate layers 63 in the channel member 16 including a laminate of four or more layers.

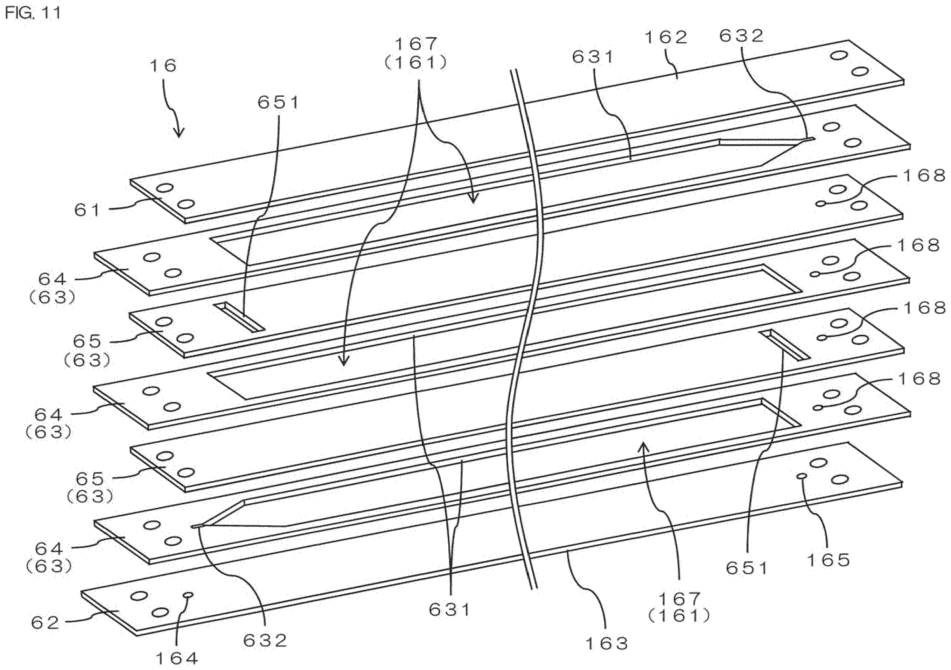

FIG. 11 is an exploded perspective view showing a third variation of the channel member 16, illustrating a state before the channel member 16 is curved in an arc shape when viewed obliquely from the outer peripheral surface 162 side. The channel member 16 in this example is formed of, for example, a laminate in which the intermediate layer 63 including a plurality of layers is stacked between the outer surface layer 61 and the inner surface layer 62. In this example, the intermediate layer 63 includes three channel layers 64 and two separation layers 65 provided between the channel layers 64, and the channel layers 64 and the separation layers 65 are stacked alternately. Each of the layers 61, 62, 64, and 65 is formed of, for example, stainless steel (SUS), and has a thickness of about 0.25 mm.

The surface of the outer surface layer 61 on the opposite side to the intermediate layer 63 side constitutes the outer peripheral surface 162 of the channel member 16 when the channel member 16 is curved in an arc shape. Further, the surface of the inner surface layer 62 on the opposite side to the intermediate layer 63 side constitutes the inner peripheral surface 163 of the channel member 16 when the channel member 16 is curved in an arc shape.

On each of the channel layers 64 constituting the intermediate layer 63, the opening 631 that penetrates the channel layers 64 and extends straight in the longitudinal direction is formed. The opening 631 can be formed by, for example, etching or electrical discharge machining. One end in the longitudinal direction of the opening 631 formed on the channel layer 64 closest to the outer surface layer 61 is formed in a gradually tapered triangle shape, and is the elongated port portion 632 in which a tip projects in the longitudinal direction. Further, also for the opening 631 formed on the channel layer 64 closest to the inner surface layer 62, an end on the opposite side to that of the port portion 632 of the channel layer 64 closest to the outer surface layer 61 is formed in a gradually tapered triangle shape, and is the elongated port portion 632 in which a tip projects in the longitudinal direction.

In a state where the layers 61, 62, 64, and 65 are stacked, the separation layer 65 provided between the channel layers 64 separates the openings 631 formed on the channel layers 64. A through-hole 651 is formed on each of the separation layers 65 at a position facing the end of the opening 631. Specifically, the through-hole 651 formed on the separation layer 65 on the outer surface layer 61 side faces the end of the opening 631 formed on the channel layer 64 closest to the outer surface layer 61 on the opposite side to the port portion 632 side. Further, the through-hole 651 formed in the separation layer 65 on the inner surface layer 62 side faces the end of the opening 631 formed on the channel layer 64 closest to the inner surface layer 62 on the opposite side to the port portion 632 side.

In this manner, the plurality of divided channels 167 constituted by the openings 631 formed in the channel layers 64 communicates with one another through the through-holes 651 formed on the separation layers 65 to constitute the continuous channel 161. The channel member 16 integrally formed in this manner is curved in an arc shape having an inner diameter substantially the same as the outer diameter of the fixing member 17 using a bending roll or the like. In a state where the channel member 16 is curved, a plurality of the divided channels 167 extending in an arc shape is formed in line in the radial direction (the stacking direction of the layers 61, 62, 64, and 65).

The inlet 164 and the outlet 165 are formed at positions facing the port portions 632 on the inner surface layer 62. On the intermediate layers 63 other than the channel layer 64 closest to the outer surface layer 61, small holes 168 are formed at positions facing the port portion 632 formed on the channel layer 64 closest to the outer surface layer 61. These small holes 168 have the same diameter as, for example, the outlet 165, and in a state where the layers 61, 62, 64, and 65 are stacked, the port portion 632 formed on the channel layer 64 closest to the outer surface layer 61 communicates with the outlet 165 via the small holes 168. In this manner, in a state where the layers 61, 62, 64, and 65 are stacked, the inlet 164 and the outlet 165 communicate with the channel 161 from the port portions 632.

In this example, the long channels 161 can be formed by allowing a plurality of the divided channels 167 arranged in a radial direction to communicate with each other. Accordingly, the classification performance can be improved. As compared to the configuration in which the curved portion 633 is provided in the channel 161 as shown in FIG. 10, a flow rate of the liquid sample in the channel 161 is less likely to vary, and the separation performance can be more effectively improved.

However, the configuration is not limited to a configuration, in which the port portion 632 formed on the channel layer 64 closest to the inner surface layer 62 communicates with the inlet 164, and the port portion 632 formed on the channel layer 64 closest to the outer surface layer 61 communicates with the outlet 165. The configuration may be such that the port portion 632 formed on the channel layer 64 closest to the inner surface layer 62 communicates with the outlet 165, and the port portion 632 formed on the channel layer 64 closest to the outer surface layer 61 communicates with the inlet 164.

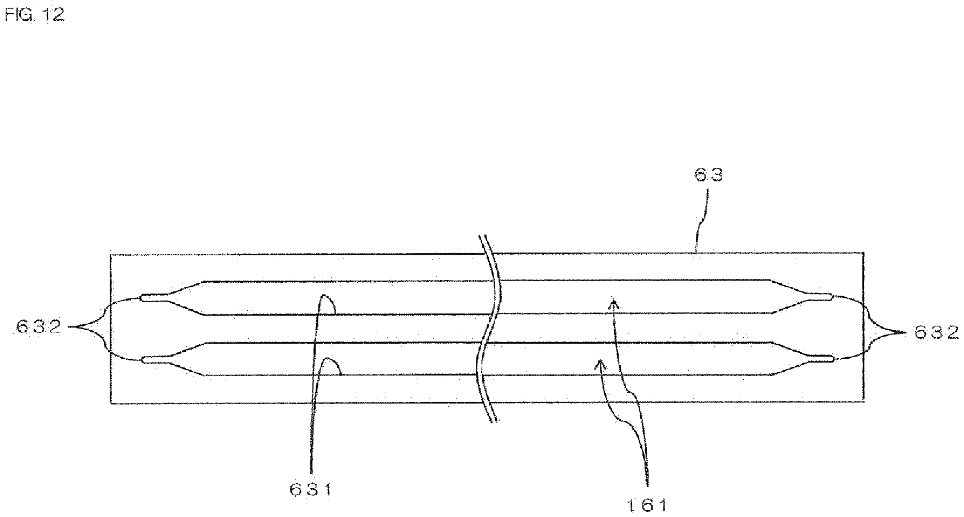

FIG. 12 is a diagram for explaining a fourth variation of the channel member 16, and shows a configuration example of the intermediate layer 63 in a plan view. In this example, not one but two of the openings 631 that extend straight in the longitudinal direction of the intermediate layer 63 are formed. The openings 631 are formed in the same shape so as to extend in parallel to each other, and the port portions 632 are provided at both ends of the openings 631.

The inlet 164 is formed on the inner surface layer 62 at a position facing the port portion 632 formed at one end of each of the openings 631, and the outlet 165 is formed at a position facing the port portion 632 formed at the other end of each of the openings 631. Therefore, in a state where the outer surface layer 61, the inner surface layer 62, and the intermediate layer 63 are stacked, a plurality of the channels 161 is formed in a plane parallel to the outer peripheral surface 162 and the inner peripheral surface 163 (in a plane parallel to the intermediate layer 63), and the inlet 164 and the outlet 165 are formed on the inner surface layer 62 in association with each of the channels 161. A plurality of the inlets 164 and the outlets 165 are formed on the inner surface layer 62, and a different one of the introduction units 12 communicates with each of the inlets 164, and a different one of the discharge units 13 communicates with each of the outlets 165.

In this example, the liquid sample can be individually introduced into a plurality of the channels 161. Therefore, if the channel 161 to be used is switched as necessary, particles in the liquid sample can be classified using different ones of the channels 161 without attaching or detaching the channel member 16. Further, if a plurality of the channels 161 is used at the same time, work efficiency can be improved.

The number of the channels 161 is not limited to two, and may be three or more. Further, the channels 161 are not limited to those having the same shape, and may be formed in different shapes (for example, different lengths or different heights). Furthermore, the channel member 16 formed of a laminate having a two-layer structure as shown in FIG. 9 or the channel member 16 formed of a laminate of four or more layers as shown in FIG. 11 can have a configuration in which a plurality of the channels 161 is formed in a plane parallel to the outer peripheral surface 162 and the inner peripheral surface 163 as in the example of FIG. 12.

The above embodiment describes the configuration in which the channel member 16 is curved in an arc shape after a plurality of layers is joined to form the integral channel member 16. However, the present invention is not limited to such a configuration, and can have a configuration in which each layer is joined to form the integral channel member 16 after a plurality of layers is curved in an arc shape.

Further, the configuration may be such that the fixing member 17 is configured integral with the channel member 16. That is, the channel 161 may be formed by forming a recess on the outer peripheral surface of the fixing member 17 by machining or etching, and closing an outer side of the fixing member 17 with the outer surface layer 61. Alternatively, the channel 161 may be formed by forming a recess on the inner peripheral surface of the outer surface layer 61 and closing an inner side of the outer surface layer 61 with the fixing member 17.

The channel member 16 is not limited to a configuration in which a plurality of layers is stacked, and may be formed as a single member of resin or the like using, for example, blow molding. Further, the channel member 16 may be provided in the centrifugal field-flow fractionation device 1 in a state in which a plurality of layers is individually stacked without being joined.

The pressure increasing mechanism 8 for increasing the pressure in the channel 161 is not limited to the resistance pipe 81 or the pressure regulator 82, and can be configured by other optional mechanisms. For example, by increasing the height of the pipe downstream of the channel 161, it is also possible to increase the pressure in the channel 161 using gravity. Further, the pressure increasing mechanism 8 may be configured by a pressure control unit that can increase the pressure in the channel 161 to an optional value.

### DESCRIPTION OF REFERENCE SIGNS

- 1: Centrifugal field-flow fractionation device
- 2: Carrier storage unit
- 3: Liquid feed pump
- 4: Rotary valve
- 5: Sample injection device
- 6: Detector
- 7: Carrier collection unit
- 8: Pressure increasing mechanism
- 10: Rotation unit
- 11: Rotational shaft
- 12: Introduction unit
- 13: Discharge unit
- 14: Rotor
- 15: Spacer
- 16: Channel member
- 17: Fixing member
- 18: Wedge-shaped member
- 19: Bolt
- 20: Holding table
- 30: Protective wall
- 40: Motor
- 50: Control unit
- 61: Outer surface layer
- 62: Inner surface layer
- 63: Intermediate layer
- 64: Channel layer
- 65: Separation layer
- 81: Resistance tube
- 82: Pressure regulator
- 91: Pipe
- 92: Pipe
- 161: Channel
- 162: Outer peripheral surface
- 163: Inner peripheral surface
- 164: Inlet
- 165: Outlet
- 811: Entrance
- 812: Exit
- 813: Resistance channel
- 821: Entrance
- 822: Exit
- 823: Pressure control chamber
- 824: Ball

## Claims

1. A centrifugal field-flow fractionation device, comprising:
an annular rotor that rotates about a rotation axis;
an arc-shaped channel member that is provided along an inner peripheral surface of the rotor, wherein the arc-shaped channel member includes an arc-shaped outer peripheral surface formed on the rotor side and an arc-shaped inner peripheral surface formed on the rotation axis side, a channel for a liquid sample is formed inside, and an inlet for a liquid sample to the channel and an outlet for a liquid sample from the channel are formed;
a rotation drive unit that rotates the rotor so that particles in a liquid sample in the channel are classified by a centrifugal force; and
a pressure increasing mechanism that is provided downstream of the channel and increases pressure in the channel.

2. The centrifugal field-flow fractionation device according to claim 1, wherein the pressure increasing mechanism increases pressure in the channel to maintain the outer peripheral surface and the inner peripheral surface in a shape extending straight along a direction parallel to the rotation axis.

3. The centrifugal field-flow fractionation device according to claim 1 or 2, wherein the pressure increasing mechanism includes a resistance channel having an inner diameter smaller than the outlet.

4. The centrifugal field-flow fractionation device according to claim 1 or 2, wherein the pressure increasing mechanism includes a pressure regulator that causes a liquid sample to flow into a downstream side when pressure from the liquid sample on an upstream side becomes a certain value or more.

5. The centrifugal field-flow fractionation device according to any of claims 1 to 4, wherein the channel member is formed of a hollow member in which the channel is formed inside by the outer peripheral surface and the inner peripheral surface formed integrally.

6. The centrifugal field-flow fractionation device according to claim 5, wherein the channel member is formed of a laminate comprising a plurality of layers joined together, the plurality of layers including an outer surface layer on which the outer peripheral surface is formed and an inner surface layer on which the inner peripheral surface is formed.
